# EUROPÄISCHE PATENTSCHRIFT

(11) **EP 4 403 797 B1**
(45) Veröffentlichungstag und Bekanntmachung des Hinweises auf die Patenterteilung: **05.08.2026**
(21) Anmeldenummer: 24153174.8
(22) Anmeldetag: 22.01.2024
(51) Int. Cl.: F16H 25/06, F16C 19/36, F16C 19/38

(54) **GETRIEBE UND VERWENDUNG EINES GETRIEBES**
TRANSMISSION AND USE OF A TRANSMISSION
TRANSMISSION ET UTILISATION D'UNE TRANSMISSION

(30) Priorität: 23.01.2023 DE 102023101575
(43) Veröffentlichungstag der Anmeldung: 24.07.2024
(73) Patentinhaber: WITTENSTEIN SE, 97999 Igersheim (DE)
(72) Erfinder: Schreiber, Heiko, 02692 Dobenschau (DE); Schlauch, Markus, 24006 León (ES)
(74) Vertreter: Zimmermann & Partner Patentanwälte mbB

(56) Entgegenhaltungen:
- EP-A2- 2 891 834
- DE-A1- 102015 119 582
- US-A1- 2015 049 975

## Beschreibung

### Gebiet der Erfindung

Die Erfindung betrifft ein Getriebe und eine Verwendung eines Getriebes.

### Stand der Technik

Aus dem Stand der Technik sind Getriebe bekannt, welche Zähne umfassen, die in einem Zahnträger radial verschieblich gelagert sind. Zum Antrieb der Zähne werden Antriebselemente mit einer Profilierung, wie beispielsweise Kurvenscheiben, verwendet. Die Zähne greifen in eine Verzahnung ein, so dass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2015 119 582 A1 veröffentlicht, welche die Basis für die zweiteilige Form bildet.

Weitere Getriebe sind in der EP 2 891 834 A2 und in der US 2015/049975 A1 gezeigt. Allerdings erfüllen bekannte Getriebe bei beengten Bauraumerfordernissen unter Umständen nicht die Anforderungen an die Kompaktheit des Getriebes. Weiterhin kann es wünschenswert sein, für einige Anwendungen Rundlauf oder Planlauf zu verbessern.

### Offenbarung der Erfindung

Aufgabe der Erfindung ist es, ein Getriebe anzugeben, welches gegenüber aus dem Stand der Technik bekannten Getrieben verbessert ist, wobei insbesondere ein kompakteres Getriebe mit möglichst großem Hohlwellendurchmesser und verbesserten Rundlauf- oder Planlauf-Eigenschaften geschaffen werden soll. Weiterhin ist es Aufgabe der Erfindung, eine Verwendung eines solchen Getriebes anzugeben.

Die Aufgabe wird mit einem Getriebe nach dem Anspruch 1 und einer Verwendung nach dem nebengeordneten Anspruch gelöst. Vorteilhafte Weiterbildungen und Ausführungsformen ergeben sich aus den Unteransprüchen und aus dieser Beschreibung.

Ein Aspekt der Erfindung betrifft ein Getriebe, insbesondere Koaxialgetriebe, mit einem Gehäuse mit einer feststehend angeordneten Verzahnung, einem relativ zu dem Gehäuse um eine Getriebeachse drehbaren Zahnträger mit Führungen, Zähnen, welche in den Führungen zum Eingriff mit der Verzahnung aufgenommen sind, wobei die Zähne in den Führungen in Richtung ihrer Längsachse relativ zu dem Zahnträger radial verschieblich gelagert sind, einer um die Getriebeachse drehbaren Kurvenscheibe zum Antrieb der Zähne entlang der jeweiligen Längsachse der Zähne, und einer Lagerreihe zwischen dem Zahnträger und dem Gehäuse zur Lagerung des Zahnträgers in dem Gehäuse, wobei die Lagerreihe axiale Wälzkörper, deren Drehachsen senkrecht zur der Getriebeachse ausgerichtet sind, und radiale Wälzkörper, deren Drehachsen parallel zur der Getriebeachse ausgerichtet sind, aufweist. Die axialen Wälzkörper sind dabei zur Aufnahme von in axialer Richtung der Getriebelängsachse wirkenden Lagerkräften ausgebildet, die radialen Wälzkörper zur Aufnahme von radial wirkenden Lagerkräften.

Bei typischen Getrieben sind die Zähne in radialer Richtung bezüglich einer Drehachse des Getriebes in den Führungen des Zahnträgers verschieblich gelagert. Die jeweiligen Längsachsen der Zähne sind typischerweise radial bezüglich der Drehachse des Getriebes oder des Zahnträgers ausgerichtet. Bei typischen Ausführungsformen sind die Führungen des Zahnträgers bezüglich der Drehachse der Kurvenscheibe radial ausgerichtet. Typischerweise sind die Zähne linear radial relativ zu dem Zahnträger gelagert. Dabei bedeutet "linear radial" üblicherweise, dass eine Führung in radialer Richtung vorliegt, welche lediglich eine Bewegung des Zahnes in radialer Richtung und insbesondere eine Verkippung des Zahns im Rahmen des Führungsspiels zulässt.

Die axialen Wälzkörper und die radialen Wälzkörper bilden eine auch als Axial-Radial-Lagerung bezeichnete Lagerung.

Ein weiterer Aspekt der Erfindung betrifft eine Verwendung eines Getriebes in einer der hierin beschriebenen typischen Ausführungsformen.

Ausführungsformen betreffen insbesondere Koaxialgetriebe. Üblicherweise umfassen typische Getriebe eine Kurvenscheibe mit einer Profilierung als Antriebselement und ein Hohlrad mit einer innenliegenden Verzahnung oder ein außenliegendes Antriebselement mit innerer Profilierung und ein innenliegendes Zahnrad, welche für den Fall des außenliegenden Antriebselementes die Verzahnung stellt. Die Verzahnung ist typischerweise eine umlaufende Hohlrad-Verzahnung. In die Verzahnung greifen die Zähne oder die Zahnköpfe der Zähne ein, wobei die Zähne typischerweise radial verschieblich relativ zu dem Zahnträger gelagert sind.

Typische Ausführungsformen können auch in umgekehrter Übersetzungsrichtung verwendet werden, dabei wird die Kurvenscheibe als Abtriebselement und der Zahnträger als Antriebselement verwendet werden. Auf diese Weise kann beispielsweise ein Generator über die Kurvenscheibe angetrieben werden, wobei ein den Zahnträger mit niedriger Drehzahl antreibendes Drehmoment ausgenutzt wird. Auch ein Antrieb oder Abtrieb über das Gehäuse, bzw. die Verzahnung des Hohlrads ist möglich.

Bei weiteren typischen Ausführungsformen sind die Führungen des Zahnträgers bezüglich der Drehachse der Kurvenscheibe parallel ausgerichtet. Typischerweise sind die Zähne in den Führungen des Zahnträgers bezüglich der Drehachse der Kurvenscheibe axial verschieblich gelagert. Typischerweise sind die Zähne linear axial relativ zu dem Zahnträger gelagert. Üblicherweise bedeutet "linear axial", dass eine Führung in axialer Richtung vorliegt, welche lediglich eine Bewegung des Zahnes in axialer Richtung zulässt. Die Zähne oder die Zahnköpfe der Zähe greifen in eine umlaufende Verzahnung ein. Die Verzahnung ist typischerweise als Planradverzahnung ausgeführt.

Typische Getriebe von Ausführungsformen umfassen genau eine Reihe von Führungen oder Zähnen in genau einem Zahnträger. Die ermöglicht einen besonders kompakten Aufbau. In weiteren Ausführungsformen weisen Getriebe zwei Reihen von Führungen oder Zähnen in einem Zahnträger auf.

Typischerweise sind die Zähne in dem Zahnträger jeweils in genau einer Richtung verschieblich gelagert, typischerweise in Richtung der Längsachse des Zahnes. Dies kann beispielsweise dadurch erreicht werden, dass der Zahn über eine bestimmte Länge, insbesondere über eine bestimmte Länge entlang der Längsachse des Zahnes, einen gleichbleibenden Querschnitt in Verschieberichtung aufweist, wobei die Führung für den Zahn in dem Zahnträger als Schlitz oder Öffnung mit gleichbleibendem Querschnitt ausgeführt ist.

Bei typischen Ausführungsformen der erfindungsgemäßen Getriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Getrieben, bei welchen auch zumindest einer der folgenden Teile ebenfalls aus Kunststoff hergestellt ist: Verzahnung an einem Hohlrad oder einem Zahnrad, Zahnträger und Antriebselement. Bei typischen Ausführungsformen der Erfindung sind der Zahnträger und die Zähne aus einer Metalllegierung oder zusätzlich noch die Verzahnung oder weiter zusätzlich das Antriebselement aus einer Metalllegierung hergestellt. Solche Getriebe bieten den Vorteil, dass sie äußerst verdrehsteif und hoch belastbar sind. Getriebe aus Kunststoff bieten den Vorteil, dass sie ein geringes Gewicht aufweisen. Mit dem Ausdruck "biegesteif" ist insbesondere eine Biegesteifigkeit um eine Querachse des Zahns gemeint. Dies bedeutet insbesondere, dass bei einer Ansicht des Zahns als Balken von einer Zahnbasis zu einem Zahnflankenbereich eine Biegesteifigkeit vorliegt, welche Biegeverformungen zwischen Zahnflankenbereich und Zahnbasis zumindest im Wesentlichen ausschließt. Durch die Biegesteifigkeit wird eine extrem hohe Belastbarkeit und Verdrehsteifigkeit des Getriebes erreicht.

Bei typischen Ausführungsformen ist zwischen dem Zahn und der Profilierung ein Schwenksegment angeordnet, welches auf einer Wälzlagerung gelagert ist, welche wiederum auf der Profilierung aufliegt. Typischerweise ist der Zahn mit dem Schwenksegment lose verbunden. Dabei bedeutet "lose Verbindung" vorzugsweise, dass das Zahnsegment lediglich auf das Schwenksegment aufgestellt, üblicherweise direkt aufgestellt ist. Bevorzugte Schwenksegmente umfassen ein Profil, welches ein Abrutschen des Zahnes von dem Schwenksegment oder ein Verrutschen des Schwenksegments zumindest in einer Richtung verhindert. Ein solches Profil kann beispielsweise ein Wulst sein, welcher in eine Ausnehmung an der Zahnbasis des Zahns eingreift. Für eine mögliche Ausführungsform eines Schwenksegments wird auf die DE 10 2015 105 523 A1 verwiesen.

Die Verzahnung und die Zähne weisen typischerweise gekrümmte Flanken auf. Beispiele für Krümmungen der Flanken sind eine zylinderförmige Krümmung, eine Krümmung der Flanken entlang einer Helix oder einer Wendelfläche um die Drehachse des Koaxialgetriebes, oder eine Krümmung in Form einer logarithmischen Spirale. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine extreme Steifigkeit bei der Kraftübertragung zwischen der Verzahnung und den Zähnen erreicht. Unter "Flanken" sind hierin insbesondere Zahnflanken der Zähne oder Flanken der Verzahnung zu verstehen.

Bei typischen Ausführungsformen ist das Gehäuse mehrteilig ausgeführt und umfasst ein als Lageraußenring ausgeführtes erstes Gehäuseteil, wobei ein Hohlrad mit der Innenverzahnung ein zweites Gehäuseteil des Gehäuses bildet. Außerdem weisen manche typische Ausführungsformen einen als Lagerflansch ausgebildetes drittes Gehäuseteil für eine Lagerung der Kurvenscheibe auf.

Bei typischen Ausführungsformen ist der Zahnträger einteilig ausgeführt. Durch die einseitig der Übersetzungskinematik befindliche Abtriebslagerung von typischen Getrieben wird der Aufbau des Zahnträgers deutlich vereinfacht und eine insgesamt hoch kompakte Konstruktion möglich. Der Zahnträger weist relativ gleichförmige Durchmesser auf.

Bei typischen Ausführungsformen umfasst der Zahnträger zumindest eine radiale Lagerlauffläche und mindestens eine axiale Lagerlauffläche. Die radiale Lagerlauffläche und die axiale Lagerlauffläche oder zumindest eine der beiden sind typischerweise integral mit oder in dem Zahnträger ausgeführt. Typischerweise laufen axiale Wälzkörper oder radiale Wälzkörper unmittelbar auf dem Zahnträger oder auf der radialen Lagerlauffläche beziehungsweise auf der axialen Lagerlauffläche.

Bei typischen Ausführungsformen ist die Lagerreihe eine erste Lagerreihe eines Lagers des Zahnträgers, wobei das Lager eine zweite Lagerreihe umfasst, welche zumindest axiale Wälzkörper aufweist. Typischerweise weist der Zahnträger zwei radiale und zwei axiale Lagerlaufflächen auf. Jede Lagerreihe weist typischerweise insgesamt zwei axiale und zwei radiale Lagerlaufflächen auf, wobei eine axiale Lagerlauffläche und eine radiale Lagerlauffläche typischerweise von dem Zahnträger gebildet werden.

Die Lagerung des Zahnträgers besteht typischerweise aus zwei, von einem am Zahnträger befindlichem Steg getrennten, Lagerreihen, in der Zylinderrollen als Wälzkörper mit Minderquerschnitt, d.h. der Wälzkörper ist im Durchmesser größer als in der Länge, eingesetzt werden. Die spezielle Rollenform erlaubt dabei in einer Lagerreihe gleichzeitig axial und radial angeordnete Wälzkörper unterzubringen. Somit sind die Druckwinkel im Gegensatz zu Kreuzrollenlager nicht +-45°, sondern 0° und 90°, womit typischerweise ein reines Axial-Radiallager gebildet wird. Die Zusammenführung der unterschiedlich ausgerichteten Wälzkörper in jeweils eine Lagerreihe ermöglicht bei hoher Präzision einen kompakten Aufbau.

Typische Lagerreihen weisen jeweils vier Lagerlaufflächen auf: radial innen, radial außen, axial links und axial rechts. Der Zahnträger weist typischerweise jeweils zwei radiale und axiale Lagerlaufflächen als integrale Bestandteile auf oder kann bei Ausführungsformen auch als Lagerinnenring bezeichnet werden. Der Lageraußenring kann Teil des Gehäuses sein und umfasst typischerweise zwei radiale und eine axiale Lagerlauffläche, insbesondere eine erste äußere axiale Lagerlauffläche, sowie eine Aufnahme für einen Axiallagerring. In einer weiteren Ausführungsform kann der Lageraußenring in einem Getriebegehäuse aufgenommen sein.

Typische Getriebe umfassen einen Axiallagerring, welcher eine axiale Lagerlauffläche aufweist. Der Axiallagerring kann zur Vorspannung der axialen Lagerreihen verwendet werden. Der Axiallagerring bildet oder umfasst typischerweise die letzte oder zweite äußere axiale Lagerlauffläche. Über seine Breite kann in Abstimmung zu einem benachbarten Hohlrad eine axiale Vorspannung der Lagerreihen eingestellt werden. Dies ermöglicht eine präzise und definierte Vorspannungseinstellung, wobei auf Wellenmuttern bei Ausführungsformen verzichtet werden kann. Der Axiallagerring bietet im montierten Zustand durch einen vorzugsweise vorhandenen axialen Überstand eine Zentrierung für ein benachbartes Hohlrad. Es wird eine hochkompakte Getriebebauform ermöglicht. Die Flexibilität des Axiallagerringes kann mit durch Abstimmung von Passungen dafür sorgen, dass möglichst keine oder wenige radiale Verformungen in das Hohlrad oder den Lageraußenring eingebracht werden. Ein weiterer Vorteil kann sein, dass zwei Planflächen am Hohlrad mit hoher Güte an Ebenheit und Parallelität einfach herzustellen sind, da seitlich hervorstehenden Zentrierungen nicht zwingend notwendig sind.

Typischerweise sind die zwei Lagerreihen nebeneinander oder in Richtung der Getriebeachse einseitig neben den Führungen im Zahnträger angeordnet. Ein Vorteil einer solchen Anordnung kann eine einfache Montage sein.

Bei typischen Ausführungsformen weisen die radialen Wälzkörper oder die axialen Wälzkörper jeweils der ersten Lagerreihe oder der zweiten Lagerreihe jeweils eine Zylinderform mit einem Durchmesser auf, welcher größer als eine Länge der Zylinderform ist. Typischerweise sind die Lagerreihen als Zylinderrollenlager ausgebildet, wobei die Wälzkörper insbesondere eine gedrungene Zylinderform aufweisen. Auf diese Weise rollen die Wälzkörper auf ihren Laufflächen ab. In typischen Ausführungsformen sind die axialen und radialen Wälzkörper im Wesentlichen identisch ausgebildet, insbesondere sind die Wälzkörper einer Lagerreihe identisch ausgebildet.

Typischerweise weisen die erste Lagerreihe und die zweite Lagerreihe jeweils axiale Wälzkörper und radiale Wälzkörper auf. Auf diese Weise werden zwei axial-radiale Lagerreihen geschaffen,. Durch Variation der Bestückung der beiden Lagerreihen mit radialen oder axialen Wälzkörpern lassen sich die Eigenschaften der Lagerung hinsichtlich Tragfähigkeit und Steifigkeit in radialer bzw. axialer Richtung variieren, womit eine individuelle Anpassung an Anwendungsapplikationen ermöglicht wird. Typischerweise muss folgende Randbedingung eingehalten werden: Mindestens eine Lagerreihe muss eine Mindestanzahl an radialen Wälzkörpern aufweisen, um eine radiale Führung zu gewährleisten. Beide Lagerreihen müssen eine Mindestanzahl an axialen Wälzkörpern aufweisen, um eine axiale Vorspannung zu ermöglichen. In typischen Ausführungsformen weist mindestens eine Lagerreihe 30% radiale Wälzkörper und beide Lagerreihen mindestens 30% axiale Wälzkörper auf. Bei typischen Ausführungsformen umfasst die zweite Lagerreihe ausschließlich axiale Wälzkörper.

Typische Getriebe weisen zwischen den Wälzkörpern eingesetzte Abstandshalter auf. Die Abstandshalter sind typischerweise jeweils zwischen zwei benachbarten Wälzkörpern einer Lagerreihe angeordnet. Die Abstandshalter können auch als "Spacer" bezeichnet werden. Mit Abstandshaltern kann ein Teilkreisendspiel sauber und einfach eingestellt werden. Ein direkter Kontakt zwischen den Wälzkörper kann zuverlässiger verhindert werden. Es können günstige tribologische Verhältnisse in den Kontakten geschaffen werden. Insbesondere bei Anwendungen mit sehr geringen Drehzahlen kann auch gegebenenfalls auf Abstandshalter verzichtet werden. Solche Ausführungsformen ohne Abstandshalter mit vollrolliger Besetzung weisen im Vergleich zu Ausführungsformen mit Spacern typischerweise mehr Wälzkörper auf, um Tragzahl und Steifigkeit zu steigern. Ein vollständiger Verzicht auf Abstandshalter kann insbesondere bei einer symmetrischen Besetzung sinnvoll sein.

Durch die Wahl von Anzahl und Anordnung der Wälzkörper ist eine individuelle Anpassung an Anwendungen möglich, wobei axiale Wälzkörper die Kipp- und Axialsteifigkeit steigern können. Radiale Wälzkörper können die Radialsteifigkeit erhöhen. Ein so genannter vollrolliger Aufbau, welcher insbesondere ohne Abstandshalter auskommt, ermöglicht mehr Wälzkörper und dadurch gesteigerte Steifigkeit und Tragfähigkeit, insbesondere bei geringen Drehzahlen.

Mögliche Szenarien für unterschiedliche Besetzungen sind insbesondere: Eine gleichmäßig alternierende Besetzung mit jeweils gleich vielen radialen und axialen Wälzkörpern, welche durch Abstandshalter getrennt werden, kann insbesondere bei nicht oder schwer vorhersehbarer Lastkonstellation sinnvoll sein. Eine gleiche Besetzung beider Lagerreihen wird auch als symmetrische Besetzung bezeichnet.

Dominieren sehr große Radialkräfte, wie zum Beispiel bei einer gegengelagerten Schwenkbrücke, können Ausführungsformen mit mehr radialen Wälzkörpern als axialen Wälzkörpern Vorteile bieten. So wäre beispielsweise eine Besetzung der Reihen zu jeweils einem Drittel axialen und zwei Dritteln radialen Wälzkörpern möglich. Bei diesem Aufbau sind Abstandshalter zwischen den radialen Wälzkörpern nicht unbedingt zwingend.

Bei Anwendungen mit relativ geringen Massen aber langem Hebelarm oder quer zur Getriebeachse wirkenden Kräften kann bei Ausführungsformen das daraus resultierende Kippmoment durch eine Besetzung mit mehr axialen Wälzkörpern als radialen Wälzkörpern aufgefangen werden. Beispielsweise mit einer Besetzung der Lagerreihen zu je zwei Dritteln axialen und einem Drittel radialen Wälzkörpern.

Bei Ausführungsformen, welche große Druck- oder Zugkräfte in axialer Richtung aufnehmen müssen, beispielsweise solche, die mit dem Abtrieb nach oben in einen Drehtisch verbaut sind, wobei auf dem Drehtisch sehr große Massen aufliegen, kann eine Lagerreihe rein mit axialen Wälzkörpern besetzt sein, um die Druckkräfte aufzufangen. Die zweite Lagerreihe kann zu gleichen Teilen alternierend mit axialen Wälzkörpern und radialen Wälzkörpern besetzt werden.

Bei Getrieben, die großen Druck- oder Zugkräften und gleichzeitig anliegenden Kippmomenten ausgesetzt sind können typische Ausführungsformen mit einer rein axial besetzten ersten Lagerreihe und einer zu zwei Dritteln axial und einem Drittel radial besetzten zweiten Lagerreihe Vorteile bieten.

Typischerweise können beide Lagerreihen regelmäßig alternierend axial und radial angeordnete Wälzkörper aufweisen, wobei eine der beiden Lagerreihen gleichmäßig oder ungleichmäßig alternierend angeordnete Wälzkörper aufweist. Eine ungleichmäßige Anordnung ist beispielsweise eine Anordnung, bei welche zwei Wälzkörper der einen Sorte, d.h. entweder axial oder radial, und dann ein Wälzkörper der anderen Sorte, also radial bzw. axial, in Reihe hintereinander in Umfangsrichtung verbaut sind.

Typischerweise weist der Lageraußenring mindestens eine axiale und mindestens eine, typischerweise genau zwei, radiale Lagerlaufflächen auf. Typischerweise laufen die radialen Wälzkörper und die axialen Wälzkörper direkt auf dem Lageraußenring. Bei typischen Ausführungsformen ist die Kurvenscheibe als Hohlwelle ausgeführt. Typischerweise weist die als An- oder Abtriebswelle ausgebildete Hohlwelle auf dem Außenumfang in axialer Richtung eine Mehrzahl von Abschnitten auf. Die Hohlwelle und die Kurvenscheibe können integral ausgeführt sein. Einer der Abschnitte bildet typischerweise die Erhöhungen der Kurvenscheibe. Weitere Abschnitte können beispielsweise einen oder mehrere Lagerabschnitte zur Aufnahme mindestens eines Lagers umfassen. Die Hohlwelle kann bei Ausführungsformen mehrteilig ausgeführt sein, beispielsweise mit in axialer Richtung hintereinander angeordneten Hohlwellenteilen. Dies kann den Vorteil bieten, dass ein Baukasten mit unterschiedlichen Kombinationen von Lagerabschnitten und Kurvenscheiben gebildet werden kann. Dies kann hohe Flexibilität und Kostenvorteile bieten. Eine vereinfachte Herstellung kann ermöglicht werden, da die verschiedenen Abschnitte einfacher und gezielter gemäß ihren unterschiedlichen Anforderungen, z.B. an Werkstoff, Oberflächengüte, Wärmebehandlung oder Ähnliches bearbeitet werden können.

Die radiale Kompaktheit der Abtriebslagerung lässt im Gegensatz zur bisherigen Konstruktion eine deutlich größere Hohlwelle zu. Diese kann bei Anwendungen zur Mediendurchführung oder zur Unterbringung einer Vorstufe bei einem mehrstufigen Aufbau genutzt werden, um einen doppelstufigen Aufbau mit kurzer axialer Baulänge zu realisieren. Die Hohlwelle weist bei typischen Getrieben einen inneren Durchmesser auf, der mindestens 30%, bevorzugt mindestens 36% des Außendurchmessers des Getriebes beträgt. Die Lagerung typischer Ausführungsformen kann solch große Innendurchmesser ermöglichen. Die Vorstufe kann dabei als Planetenvorstufe ausgebildet werden, wobei die Kurvenscheibe den Planetenträger bildet und eine Hohlradverzahnung der Planetenstufe mit dem Zahnträger verbunden ist.

Vorteilhaft hinsichtlich der Fertigung ist die Aufteilung des Gehäuses in einen Teil der Abtriebslagerung mit dem Lageraußenring und einen Teil mit der Verzahnung des Hohlrads. Beide Teile haben stark unterschiedliche Beanspruchungen und können so jeweils im Werkstoff, aber auch der Wärmebehandlung optimal auf ihre Aufgabe angepasst werden.

Vorteilhaft für die Montage ist das definierte Einstellen der Lagervorspannung durch selektierbare Bauteile. Ein Anstellen mittels Wellenmuttern kann entfallen, so dass schwankende Lagervorspannungen weitergehend vermieden werden können.

Weitere Vorteile von Ausführungsformen können sein: In allen Dimensionen hochkompakte Antriebslagerung, welche eine deutliche Steigerung des Hohlwellendurchmessers sowie eine Verkürzung der Baulänge des Getriebes ermöglicht. Einfachere und kostengünstigere Herstellung der Lagerlaufflächen, da senkrecht bzw. parallel zur Getriebeachse. Einfachere Geometrie des Zahnträgers und der Gehäuseteile, so dass eine kostengünstigere Herstellung und individuellere Bearbeitung möglich werden. Präzise Lagerung aufgrund geringer Toleranzen der Einzelteile und eine hohe Tragfähigkeit. Verbesserter Rund- und Planlauf aufgrund der integrierten Lagerlaufflächen. Einfache Einstellung der Lagervorspannung durch Axiallagerring und selektierte Bauteile. Eine Wellenmutter ist nicht zwingend erforderlich. Es ist eine individuelle Anpassung der Bestückung mit Wälzkörpern an den Anwendungsfall möglich.

Typische erfindungsgemäße Getriebe kommen z.B. in der Robotik, in Werkzeugmaschinen, Verpackungsmaschinen, Dreh- oder Fräsmaschinen sowie sonstigen industriellen Antriebssträngen zum Einsatz. Im generatorischen Betrieb können diese in Windkraftanlagen oder sonstigen Anlagen zur Energieerzeugung eingesetzt werden.

Besonders vorteilhaft sind diese für Anwendungen mit hohen Anforderungen an Drehmoment- und Leistungsdichte, großem Hohlwellendurchmesser, hoher Steifigkeit, geringem Spiel oder Nullspiel oder Kompaktheit.

### Kurze Beschreibung der Zeichnungen

Nachfolgend wird die Erfindung anhand der beiliegenden Zeichnungen näher erläutert, wobei die Figuren zeigen:
- Fig. 1: zeigt einen schematischen Querschnitt einer typischen Ausführungsform;
- Fig. 2: zeigt ein Teil der typischen Ausführungsform der Fig. 1 in einer perspektivischen, schematischen Ansicht;
- Fig. 3: zeigt ein Teil einer typischen Ausführungsform in einer perspektivischen, schematischen Ansicht;
- Fig. 4: zeigt ein Teil einer typischen Ausführungsform in einer perspektivischen, schematischen Ansicht;
- Fig. 5: zeigt ein Teil einer typischen Ausführungsform in einer perspektivischen, schematischen Ansicht; und
- Fig. 6: zeigt lediglich Wälzkörper einer typischen Ausführungsform in einer perspektivischen, schematischen Ansicht.

### Beschreibung von Ausführungsbeispielen

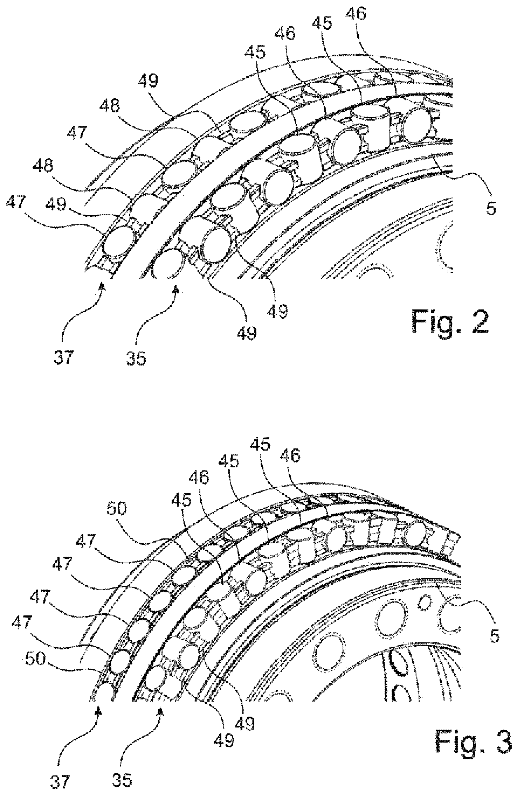

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Zur Übersichtlichkeit sind teilweise nicht alle jeweiligen Merkmale mit einem Bezugszeichen versehen, beispielsweise in der Fig. 2 die Wälzkörper und die Abstandshalter.

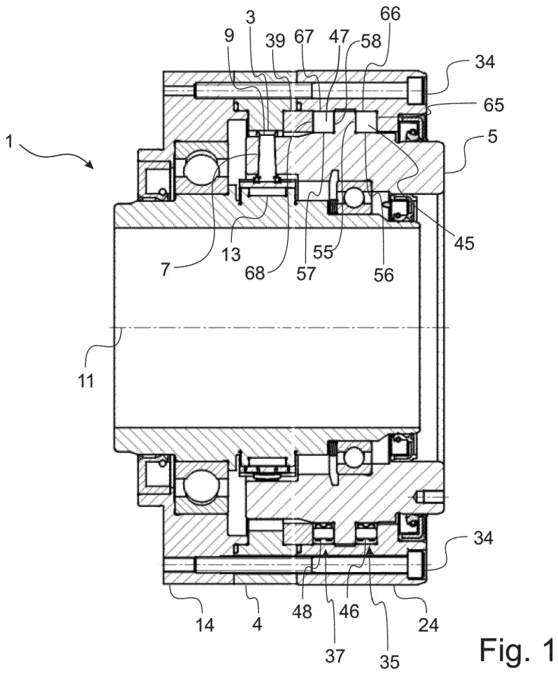

In der Fig. 1 ist ein schematischer Querschnitt einer typischen Ausführungsform der Erfindung. Die Fig. 1 zeigt ein Getriebe 1 mit Zähnen 9, welche verschieblich in Führungen 7 eines Zahnträgers 5 aufgenommen sind. Der Zahnträger 5 ist drehbar um eine Getriebeachse 11 des Getriebes 1 gelagert.

Der Zahnträger 5 ist zwischen einer Verzahnung 3 eines Hohlrads 4 und einer Kurvenscheibe 13 angeordnet und bildet auch den Abtrieb. Das Hohlrad 4 und die Kurvenscheibe 13 sind ebenfalls konzentrisch zur Getriebeachse 11 angeordnet. Der Abtrieb liegt an der rechten Seite in der Fig. 1. Der Zahnträger 5 ist einteilig mit dem Abtrieb ausgeführt. Wie alle Ausführungsformen kann das Getriebe 1 auch in umgekehrter Richtung betrieben werden, wobei der Zahnträger 5 den eingangsseitigen Antrieb des Getriebes 1 bilden.

In der Fig. 1 sind die Führungen 7 radial ausgerichtet und die Zähne 9 linear radial verschieblich in den Führungen 7 gelagert. Insbesondere sind die Zähne 9 entlang ihrer jeweiligen Längsachse verschieblich. Die Längsachse ist parallel zu der jeweiligen Führung 7 ausgerichtet. Die Zähne 9 können zum Eingriff mit einer Verzahnung 3 des Hohlrads 4 radial verschoben werden. In der Fig. 1 ist jeweils nur ein Zahn 9 und eine Führung 7 in der Schnittansicht geschnitten. Für weitere Informationen zum Aufbau wird auf die DE 10 2015 119 582 A1 verwiesen.

Die Kurvenscheibe 13 dient in dem Getriebe 1 der Fig. 1 üblicherweise als Antriebselement des Getriebes 1. Die Kurvenscheibe 13 weist eine Profilierung in Umfangsrichtung der Kurvenscheibe 13 auf. Die Profilierung weist einen Verlauf mit zwei Erhebungen über den Umfang auf, welche die Zähne 9 in radialer Richtung beaufschlagen.

Die Kurvenscheibe 13 ist bei der Ausführungsform der Fig. 1 integral mit einer Hohlwelle ausgeführt. Der Innen-Durchmesser der Hohlwelle beträgt mehr als 30% des Außenumfangs des Getriebes 1.

Das Getriebe 1 weist ein mehrteiliges Gehäuse auf, wobei das Hohlrad 4 einen zweiten Gehäuseteil des Gehäuses bildet. Das Hohlrad 4 wird zwischen einem als Lageraußenring ausgebildeten ersten Gehäuseteil 24 und einem dritten Gehäuseteil 14 des Gehäuses geklemmt, wobei Schrauben 34 die Gehäuseteile 14 und 24 jeweils gegen das mittig angeordnete Hohlrad 4 pressen.

Der Zahnträger 5 ist mittels einer ersten Lagerreihe 35 und einer zweiten Lagerreihe 37 in dem Teil 24 des Gehäuses des Getriebes 1 gelagert. Die Lagerreihen 35 und 37 umfassen jeweils axiale Wälzkörper 45 bzw. 47, deren Drehachse senkrecht zur der Getriebeachse 11 ausgerichtet sind, und radiale Wälzkörper 46 bzw. 48, deren Drehachse parallel zur der Getriebeachse 11 ausgerichtet sind. Die Wälzkörper 45 - 48 sind in der Fig. 2 dargestellt, welche einen Ausschnitt der Ausführungsform der Fig. 1 in einer schematischen perspektivischen Teilansicht zeigt.

In der Fig. 1 sind in der oberen Zeichnungshälfte zwei axiale Wälzkörper 45 und 47 dargestellt. Die Wälzkörper 45 - 48 haben jeweils einen Durchmesser, welcher größer als die Länge des Wälzkörpers ist. Auf diese Weise rollen die Wälzkörper 45 - 48 auf Laufflächen ab, ohne dass die Stirnseiten der zylinderförmigen Wälzkörper 45 - 48 mit den Laufflächen in Last-tragenden Kontakt kommen.

Die radialen Wälzkörper 46 und 48 laufen auf inneren radialen Lagerlaufflächen 56 und 57 des Zahnträgers 5 sowie auf äußeren radialen Lagerlaufflächen 66 und 67 des Teils 24 des Gehäuses des Getriebes 1. Die axialen Wälzkörper 45 und 47 laufen auf inneren axialen Lagerlaufflächen 55 und 58 des Zahnträgers 5, welche durch einen Steg des Zahnträgers gebildet werden. Weiterhin laufen die Wälzkörper 45 der ersten Lagerreihe 35 auf einer ersten äußeren axialen Lagerlauffläche 65 des Teils 24 des Gehäuses des Getriebes 1. Ein Axiallagerring 39 bildet eine zweite äußere axiale Lagerlauffläche 68 für die axialen Wälzkörper 47, wie in Fig. 1 in der unteren Bildhälfte gezeigt.

Der Axiallagerring 39 stützt sich in axialer Richtung an dem Hohlrad 4 und dem ersten Gehäuseteil 24 ab und kann in seiner axialen Abmessung gewählt werden, um eine definierte axiale Vorspannung in den Lagerreihen 35 und 37 zu erzeugen.

In der Fig. 2 sind einige Details der Ausführungsform der Fig. 1 in einer perspektivischen Teildarstellung schematisch gezeigt. Hohlrad und Gehäuse sind entfernt.

Die erste Lagerreihe 35 bzw. die zweite Lagerreihe 37 weisen jeweils alternierend im Wechsel 1:1 axiale Wälzkörper 45 bzw. 47 und radiale Wälzkörper 46 bzw. 48 auf. Zwischen den Wälzkörpern sind jeweils Abstandshalter 49 angeordnet.

Die Figuren 3 - 5 zeigen jeweils ein Teil weiterer typischer Ausführungsformen in perspektivischen, schematischen Ansichten. Die Ausführungsformen der Figuren 3 - 5 entsprechen in vielen Elementen der Ausführungsform der Figuren 1 und 2, so dass auf die Beschreibung identischer Elemente verzichtet wird.

Die Fig. 3 zeigt in einem Ausschnitt Lagerreihen 35 und 37 einer typischen Ausführungsform in einer perspektivischen, schematischen Ansicht. Die erste Lagerreihe 35 weist erste axiale Wälzkörper 45 und erste radiale Wälzkörper 46 im Wechsel 2:1 auf. Die zweite Lagerreihe 37 weist ausschließlich zweite axiale Wälzkörper 47 und keine radialen Wälzkörper auf. Zwischen den Wälzkörpern beider Lagerreihen 35 und 37 sind jeweils Abstandshalter angeordnet. Zwischen zwei gleich ausgerichteten Wälzkörpern der Lagerreihe 37 ist dabei ein Abstandshalter 50 mit symmetrisch zueinander angeordneten konkaven Ausnehmungen vorgesehen. Der zwischen einem radialen und axialen Wälzkörper angeordnete Abstandshalter 49 in der Lagerreihe 35 weist dagegen zwei um 90° zueinander verdreht angeordnete konkave Ausnehmungen auf.

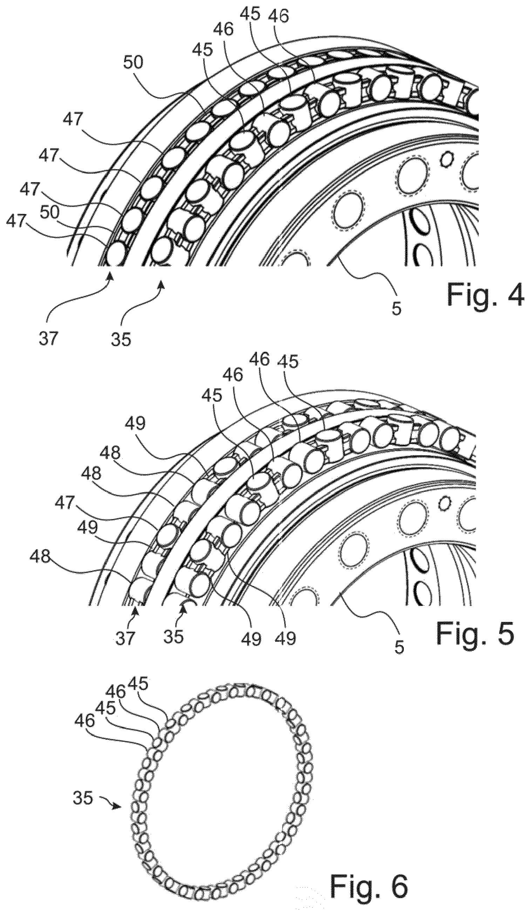

Die Fig. 4 zeigt in einem Ausschnitt Lagerreihen 35 und 37 einer typischen Ausführungsform in einer perspektivischen, schematischen Ansicht. Die erste Lagerreihe 35 weist erste axiale Wälzkörper 45 und erste radiale Wälzkörper 46 im Wechsel 1:1 auf. Die zweite Lagerreihe 37 weist ausschließlich zweite axiale Wälzkörper 47 und keine radialen Wälzkörper auf. Zwischen den axialen Wälzkörpern der Lagerreihe 35 sind Abstandshalter 50 und zwischen den axialen und radialen Wälzkörpern in der Lagerreihe 37 sind Abstandshalter 49 angeordnet.

Die Fig. 5 zeigt in einem Ausschnitt Lagerreihen 35 und 37 einer typischen Ausführungsform in einer perspektivischen, schematischen Ansicht. Die erste Lagerreihe 35 weist erste axiale Wälzkörper 45 und erste radiale Wälzkörper 46 im Wechsel 1:2 auf. Die zweite Lagerreihe 37 weist zweite axiale Wälzkörper 47 und zweite radiale Wälzkörper 48 ebenfalls im Wechsel 1:2 auf. Zwischen axial und radial angeordneten Wälzkörpern beider Lagerreihen 35 und 37 sind jeweils Abstandshalter 49 angeordnet. Zwischen den radial angeordneten Wälzkörpern 46, 48 muss nicht zwingend ein Abstandshalter vorhanden sein.

Fig. 6 zeigt lediglich Wälzkörper einer typischen Ausführungsform in einer perspektivischen, schematischen Ansicht. Es ist eine erste Lagerreihe 35 mit ersten axialen Wälzkörpern 45 und ersten radialen Wälzkörpern 46 gezeigt, zwischen denen jeweils keine Abstandshalter angeordnet sind.

Die Erfindung ist nicht auf zuvor beschriebene Ausführungsform beschränkt, vielmehr wird der Umfang der Erfindung durch die beigefügten Ansprüche bestimmt.

### Bezugszeichenliste

- 1: Getriebe
- 3: (Innen-) Verzahnung
- 4: Hohlrad
- 5: Zahnträger
- 7: Führungen
- 9: Zähne
- 11: Getriebeachse
- 13: Kurvenscheibe
- 14: drittes Gehäuseteil
- 24: erstes Gehäuseteil / Lageraußenring
- 34: Schrauben
- 35: erste Lagerreihe
- 37: zweite Lagereihe
- 39: Axiallagerring
- 45: erste axiale Wälzkörper
- 46: erste radiale Wälzkörper
- 47: zweite axiale Wälzkörper
- 48: zweite radiale Wälzkörper
- 49: Abstandshalter
- 55: erste innere axiale Lagerlauffläche
- 56: erste innere radiale Lagerlauffläche
- 57: zweite innere radiale Lagerlauffläche
- 58: zweite innere axiale Lagerlauffläche
- 65: erste äußere axiale Lagerlauffläche
- 66: erste äußere radiale Lagerlauffläche
- 67: zweite äußere radiale Lagerlauffläche
- 68: zweite äußere axiale Lagerlauffläche

## Patentansprüche

1. Getriebe (1), insbesondere Koaxialgetriebe, mit
- einem Gehäuse mit einer feststehend angeordneten Verzahnung (3),
- einem relativ zu dem Gehäuse um eine Getriebeachse (11) drehbaren Zahnträger (5) mit Führungen (7),
- Zähnen (9), welche in den Führungen (7) zum Eingriff mit der Verzahnung (3) aufgenommen sind, wobei die Zähne (9) in den Führungen (7) in Richtung ihrer Längsachse relativ zu dem Zahnträger (5) radial verschieblich gelagert sind,
- einer um die Getriebeachse (11) drehbaren Kurvenscheibe (13) zum Antrieb der Zähne (9) entlang der jeweiligen Längsachse der Zähne (9), und
- einer Lagerreihe (35, 37) zwischen dem Zahnträger (5) und dem Gehäuse zur Lagerung des Zahnträgers (5) in dem Gehäuse,
**dadurch gekennzeichnet, dass**
- die Lagerreihe (35, 37) axiale Wälzkörper (45, 47), deren Drehachsen senkrecht zur der Getriebeachse (11) ausgerichtet sind, und radiale Wälzkörper (46, 48), deren Drehachsen parallel zur der Getriebeachse (11) ausgerichtet sind, aufweist.

2. Getriebe (1) nach Anspruch 1, wobei das Gehäuse mehrteilig ausgeführt ist und ein als Lageraußenring ausgeführtes erstes Gehäuseteil (24) umfasst, und wobei ein Hohlrad (4) mit der Innenverzahnung (3) ein zweites Gehäuseteil des Gehäuses bildet.

3. Getriebe (1) nach einem der vorhergehenden Ansprüche, wobei der Zahnträger (5) einteilig ausgeführt ist.

4. Getriebe (1) nach einem der vorhergehenden Ansprüche, wobei der Zahnträger (5) zumindest eine radiale Lagerlauffläche und mindestens eine axiale, insbesondere mindestens zwei Lagerlaufflächen aufweist.

5. Getriebe (1) nach einem der vorhergehenden Ansprüche, wobei die Lagerreihe eine erste Lagerreihe (35) eines Lagers des Zahnträgers ist, und wobei das Lager eine zweite Lagerreihe (37) umfasst, welche zumindest axiale Wälzkörper aufweist.

6. Getriebe (1) nach Anspruch 5, wobei die zwei Lagerreihen (35, 37) in Richtung der Getriebeachse nebeneinander und/oder einseitig neben der Zahnführung angeordnet sind.

7. Getriebe (1) nach einem der Ansprüche 5 oder 6, wobei die radialen Wälzkörper und/oder die axialen Wälzkörper jeweils der ersten Lagerreihe und/oder der zweiten Lagerreihe jeweils eine Zylinderform mit einem Durchmesser aufweisen, welcher größer als eine Länge der Zylinderform ist.

8. Getriebe (1) nach einem der Ansprüche 5 bis 7, wobei die erste Lagerreihe und die zweite Lagerreihe jeweils axiale Wälzkörper und radiale Wälzkörper aufweisen.

9. Getriebe (1) nach einem der Ansprüche 5 bis 7, wobei die zweite Lagerreihe ausschließlich axiale Wälzkörper aufweist.

10. Getriebe (1) nach einem der Ansprüche 2 bis 9, wobei der Lageraußenring mindestens eine axiale und mindestens eine radiale Lagerlauffläche aufweist.

11. Getriebe nach Anspruch 10 mit einem Axiallagerring, welcher eine axiale Lagerlauffläche aufweist.

12. Getriebe nach einem der vorhergehenden Ansprüche, wobei die Kurvenscheibe als Hohlwelle ausgeführt ist.

13. Getriebe nach einem der vorhergehenden Ansprüche, wobei zwischen den Wälzkörpern Abstandshalter (49, 50) eingesetzt sind.

## Claims

1. Gear mechanism (1), in particular a coaxial gear mechanism, comprising
- a housing having a fixed toothing (3),
- a tooth carrier (5) which has guides (7) and is rotatable relative to the housing about a gear axis (11),
- teeth (9) which are received in the guides (7) for engagement with the toothing (3), the teeth (9) being mounted in the guides (7) so as to be radially movable relative to the tooth carrier (5) in the direction of their longitudinal axis,
- a cam disc (13), which is rotatable about the gear axis (11), for driving the teeth (9) along the relative longitudinal axis of the teeth (9), and
- a bearing series (35, 37) between the tooth carrier (5) and the housing for mounting the tooth carrier (5) in the housing,
**characterised in that**
- the bearing series (35, 37) has axial rolling elements (45, 47), the axes of rotation of which are aligned perpendicular to the gear axis (11), and radial rolling elements (46, 48), the axes of rotation of which are aligned parallel to the gear axis (11).

2. Gear mechanism (1) according to claim 1, wherein the housing is designed in multiple pieces and comprises a first housing part (24) designed as a bearing outer ring, and wherein a ring gear (4), which has the internal toothing (3), forms a second housing part of the housing.

3. Gear mechanism (1) according to either of the preceding claims, wherein the tooth carrier (5) is designed in one piece.

4. Gear mechanism (1) according to any of the preceding claims, wherein the tooth carrier (5) has at least one radial bearing surface and at least one axial, in particular at least two, bearing surfaces.

5. Gear mechanism (1) according to any of the preceding claims, wherein the bearing series is a first bearing series (35) of a bearing of the tooth carrier, and wherein the bearing comprises a second bearing series (37) which has at least axial rolling elements.

6. Gear mechanism (1) according to claim 5, wherein the two bearing series (35, 37) are arranged side by side in the direction of the gear axis and/or on one side next to the tooth guide.

7. Gear mechanism (1) according to either of claims 5 or 6, wherein the radial rolling elements and/or the axial rolling elements of each of the first bearing series and/or the second bearing series each have a cylindrical shape with a diameter which is greater than a length of the cylindrical shape.

8. Gear mechanism (1) according to any of claims 5 to 7, wherein the first bearing series and the second bearing series each have axial rolling elements and radial rolling elements.

9. Gear mechanism (1) according to any of claims 5 to 7, wherein the second bearing series has exclusively axial rolling elements.

10. Gear mechanism (1) according to any of claims 2 to 9, wherein the bearing outer ring has at least one axial and at least one radial bearing surface.

11. Gear mechanism according to claim 10 having an axial bearing ring which has an axial bearing surface.

12. Gear mechanism according to any of the preceding claims, wherein the cam disc is designed as a hollow shaft.

13. Gear mechanism according to any of the preceding claims, wherein spacers (49, 50) are inserted between the rolling elements.

## Revendications

1. Transmission (1), en particulier transmission coaxiale, comprenant
- un carter comportant une denture (3) disposée de manière fixe,
- un porte-dents (5) pouvant tourner par rapport au carter autour d'un axe de transmission (11) et muni de guides (7),
- des dents (9) qui sont logées dans les guides (7) pour s'engrener avec la denture (3), les dents (9) étant montées dans les guides (7) de manière à pouvoir coulisser radialement dans la direction de leur axe longitudinal par rapport au porte-dents (5),
- une came (13) pouvant tourner autour de l'axe de transmission (11) pour entraîner les dents (9) le long de l'axe longitudinal respectif des dents (9), et
- une rangée de montage (35, 37) entre le porte-dents (5) et le carter pour monter le porte-dents (5) dans le carter,
**caractérisée en ce que**
- la rangée de montage (35, 37) comporte des éléments roulants axiaux (45, 47), dont les axes de rotation sont orientés perpendiculairement à l'axe de transmission (11), et des éléments roulants radiaux (46, 48), dont les axes de rotation sont orientés parallèlement à l'axe de transmission (11).

2. Transmission (1) selon la revendication 1,
dans laquelle le carter est réalisé en plusieurs parties et comprend une première partie de carter (24) réalisée sous forme de bague de palier extérieure, et une couronne dentée (4) munie de la denture intérieure (3) forme une deuxième partie du carter.

3. Transmission (1) selon l'une des revendications précédentes,
dans laquelle le porte-dents (5) est réalisé d'un seul tenant.

4. Transmission (1) selon l'une des revendications précédentes,
dans laquelle le porte-dents (5) comporte au moins une surface de roulement radiale et au moins une surface de roulement axiale, en particulier au moins deux surfaces de roulement.

5. Transmission (1) selon l'une des revendications précédentes,
dans laquelle la rangée de montage est une première rangée de montage (35) d'un palier du porte-dents, et le palier comprend une deuxième rangée de montage (37) qui comporte au moins des éléments roulants axiaux.

6. Transmission (1) selon la revendication 5,
dans laquelle les deux rangées de montage (35, 37) sont disposées l'une à côté de l'autre dans la direction de l'axe de transmission et/ou d'un seul côté du guide de dents.

7. Transmission (1) selon l'une des revendications 5 ou 6,
dans laquelle les éléments roulants radiaux et/ou les éléments roulants axiaux de la première rangée de montage et/ou de la deuxième rangée de montage présentent chacun une forme cylindrique dont le diamètre est supérieur à la longueur de la forme cylindrique.

8. Transmission (1) selon l'une des revendications 5 à 7,
dans laquelle la première rangée de montage et la deuxième rangée de montage comportent chacune des éléments roulants axiaux et des éléments roulants radiaux.

9. Transmission (1) selon l'une des revendications 5 à 7,
dans laquelle la deuxième rangée de montage comporte exclusivement des éléments roulants axiaux.

10. Transmission (1) selon l'une des revendications 2 à 9,
dans laquelle la bague de palier extérieure comporte au moins une surface de roulement axiale et au moins une surface de roulement radiale.

11. Transmission selon la revendication 10,
comportant une bague de palier axial qui comporte une surface de roulement axiale.

12. Transmission selon l'une des revendications précédentes,
dans laquelle la came est réalisée sous la forme d'un arbre creux.

13. Transmission selon l'une des revendications précédentes,
dans laquelle des entretoises (49, 50) sont insérées entre les éléments roulants.
